# EUROPEAN PATENT APPLICATION

(11) **EP 4 481 254 A1**
(43) Date of publication of application: **25.12.2024**
(21) Application number: 24182485.3
(22) Date of filing: 17.06.2024
(51) Int. Cl.: F16L 17/035, F16L 27/08

(54) **FUELLING NOZZLE SWIVEL JOINT**

(30) Priority: 20.06.2023 JP 2023100483
(71) Applicant: Tatsuno Corporation, Tokyo 108-0073 (JP)
(72) Inventor: XIA, Jianyong, Tokyo, 108-0073 (JP); TAKESHIMA, Ayumi, Tokyo, 108-0073 (JP)
(74) Representative: Isarpatent

(57) **Abstract**

[OBJECT] To provide a fueling nozzle swivel joint that prevents wear of rotating bodies from being accelerated by abrasion powder generated by the wear of the rotating bodies, and allows a main body and bushes to smoothly rotate relative to each other.

[SOLUTION] A swivel joint 20 of a fueling nozzle 100 according to the present invention is characterized by including: a cylindrical main body 2, a hollow fueling nozzle side bush 1 fitted into a fueling nozzle side end 2A of the main body 2; a hollow fueling hose side bush 3 fitted into a fueling hose side end 2B of the main body 2; rotating bodies 7 interposed between the fitting surfaces of the main body 2 and the bush 1 to allow relative rotation of the main body 2 and the bush 1; and rotating bodies 7 interposed between the fitting surfaces of the main body 2 and the bush 3 to allow relative rotation of the main body 2 and the bush 3, wherein no sealing member is provided in a region of the fitting surfaces of the main body 2 and the bush 1 from where the rotating bodies 7 are located toward the main body side end 1B of the bush 1 and so on, and a sealing member 8, 9 is provided in a region of the fitting surfaces of the main body 2 and the bush 1 from where the rotating bodies 7 are located toward a fueling nozzle side end 2A of the main body 2 and so on.

## Description

### BACKGROUND

### 1. Field of the Invention

The present invention relates to a swivel joint used to connect a fueling nozzle to a tip of a fueling hose in a fueling device.

### 2. Description of the Related Art

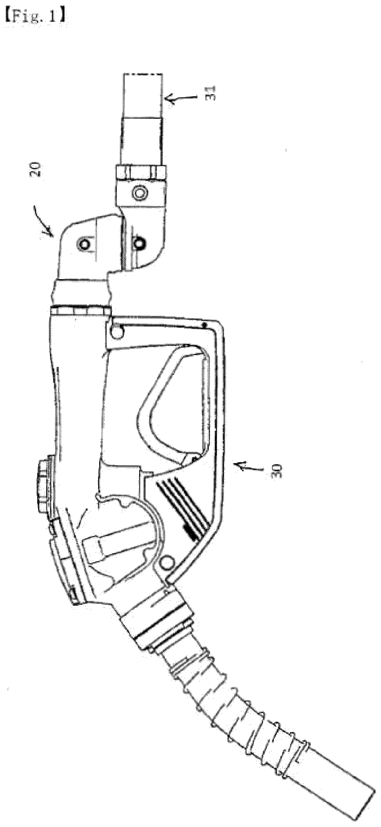

As shown in Fig. 1, by connecting a fueling nozzle 30 to a tip of a fueling hose 31 via a swivel joint 20, the operability of the fueling nozzle 30 is improved and a fueling range is expanded (for example, see JP-A-S-60-183399).

Although not shown in Fig. 1, rotating bodies (balls) are disposed on the swivel joint 20 to ensure smooth rotation, and the area where the rotating bodies are disposed is filled with lubricating oil. However, when a main body of the swivel joint 20 and bushes rotate and slide relative to each other, the rotating bodies wear out and abrasion powder is generated. This powder further accelerates the wear of the rotating bodies and also obstructs the sliding movement of the main body and the bush in the swivel joint 20 when they rotate relative to each other.

The content of JP-A-S-60-183399 gazette is incorporated herein by reference in its entirety.

### BRIEF SUMMARY

The present invention has been proposed in view of the problems of the prior art described above, and an object thereof is to provide a fueling nozzle swivel joint that prevents the wear of the rotating bodies from being accelerated by the abrasion powder generated by the wear of the rotating bodies, and allows the main body and the bushes to smoothly rotate relative to each other.

A swivel joint 20 of a fueling nozzle 100 according to the present invention is characterized by including: a cylindrical main body 2, a hollow fueling nozzle side bush 1 fitted into a fueling nozzle side end 2A of the main body 2; a hollow fueling hose side bush 3 fitted into a fueling hose side end 2B of the main body 2; rotating bodies 7 interposed between fitting surfaces of the main body 2 and the fueling nozzle side bush 1 to allow relative rotation of the main body 2 and the fueling nozzle side bush 1; and rotating bodies 7 interposed between fitting surfaces of the main body 2 and the fueling hose side bush 3 to allow relative rotation of the main body 2 and the fueling hose side bush 3, wherein no sealing member is provided in a region of the fitting surfaces of the main body 2 and the fueling nozzle side bush 1 from where the rotating bodies 7 are located toward the main body side end 1B of the fueling nozzle side bush 1 and in a region of the fitting surfaces of the main body 2 and the fueling hose side bush 3 from where the rotating bodies 7 are located toward the main body side end 3B of the fueling hose side bush 3, and sealing members 8, 9 are provided in a region of the fitting surfaces of the main body 2 and the fueling nozzle side bush 1 from where the rotating bodies 7 are located toward a fueling nozzle side end 2A of the main body 2 and in a region of the fitting surfaces of the main body 2 and the fueling hose side bush 3 from where the rotating bodies 7 are located toward a fueling hose side end 2B of the main body 2.

In the fueling nozzle swivel joint described above, the sealing members 8, 9 disposed between the fitting surfaces of the main body 2 and the fueling nozzle side bush 1 and between the fitting surfaces of the main body 2 and the fueling hose side bush 3 are preferably packings 8, 9 having an annular shape as a whole and a U-shaped cross section.

The packings 8, 9 preferably have a base whose one surface is flat over an entire circumference, and two protrusions protruding from the base and arranged concentrically, and the one surfaces of the packings 8, 9 are flush with the fitting surfaces of the main body 2 and the fueling nozzle side bush 1 or the fitting surfaces of the main body 2 and the fueling hose side bush 3.

### EFFECTS OF THE INVENTION

With the swivel joint 20 having the above-described configuration, no sealing member is provided in the region of the fitting surfaces of the main body 2 and the fueling nozzle side bush 1 from where the rotating bodies 7 are located toward the main body side end 1B of the fueling nozzle side bush 1 and in the region of the fitting surfaces of the main body 2 and the fueling hose side bush 3 from where the rotating bodies 7 are located toward the main body side end 3B of the fueling hose side bush 3. Therefore, fuel oil flowing inside the swivel joint 20 reaches the rotating bodies 7 via the two regions. As a result, when fueling is performed with the fueling device and the pressure in a flow path fluctuates due to fueling and stoppage of fueling, fuel oil moves from the internal flow path of the swivel joint 20 to the rotating bodies 7, and from the rotating bodies 7 to the internal flow path. Due to such movement of the fuel oil, abrasion powder of the rotating bodies 7 flows to the internal flow path and does not stay near the rotating bodies 7. Here, since the amount of abrasion powder generated is extremely small, no inconvenience will occur even if it is flushed into the internal flow path with the fuel oil. Further, since the rotating bodies 7 are immersed in the fuel oil, they are lubricated and wear is suppressed in the same way as when lubricating oil is injected. Since the fuel oil acts as a lubricating oil, there is no need to separately inject lubricating oil (grease, etc.), and there is no need to periodically replenish lubricating oil.

On the other hand, the sealing members 8, 9 are provided in the region of the fitting surfaces of the main body 2 and the fueling nozzle side bush 1 from where the rotating bodies 7 are located toward the fueling nozzle side end 2A of the main body 2 and in the region of the fitting surfaces of the main body 2 and the fueling hose side bush 3 from where the rotating bodies 7 are located toward the fueling hose side end 2B of the main body 2. The sealing members 8, 9 prevent fuel oil from leaking to the outside of the swivel joint 20. Moreover, the sealing members 8, 9 prevent rainwater, water containing salt, and disinfectant from entering the rotating bodies 7 side from the outside of the swivel joint 20 and causing rust. Furthermore, lubricating oil whose viscosity has decreased due to deterioration will no longer leak out of the swivel joint 20, and no complaints will be received from customers who mistakenly believe that fuel oil has leaked.

As described above, pressure fluctuations in the internal flow path due to fueling and stoppage propagate to accommodating parts (ball built-in parts 4, 5) of the seal members 8, 9, and the seal members 8, 9 move in the accommodating part in the longitudinal direction CL. This movement further promotes the movement of the fuel oil, making it easier for the abrasion powder of the rotating bodies 7 to be discharged from the accommodating part.

### BRIEF DESCRIPTION OF THE DRAWINGS

[Figure 1] A schematic diagram showing a fueling nozzle with a swivel joint.
[Figure 2] A sectional view showing a conventional fueling nozzle swivel joint and its vicinity.
[Figure 3] A sectional view showing a fueling nozzle swivel joint according to an embodiment of the present invention in a cross section different from that in Fig. 2.
[Figure 4] A diagram showing the swivel joint in Fig. 3 corresponding to a view taken along an arrow A2 in Fig. 2.
[Figure 5] A schematic diagram for explaining an action of a sealing member of the swivel joint in Fig. 3.
[Figure 6] A schematic diagram showing a U-packing different from those normally used.
[Figure 7] A partial cross-sectional view showing a problem when the U-packing is provided at a position apart from an end of a main body.

### DETAILED DESCRIPTION

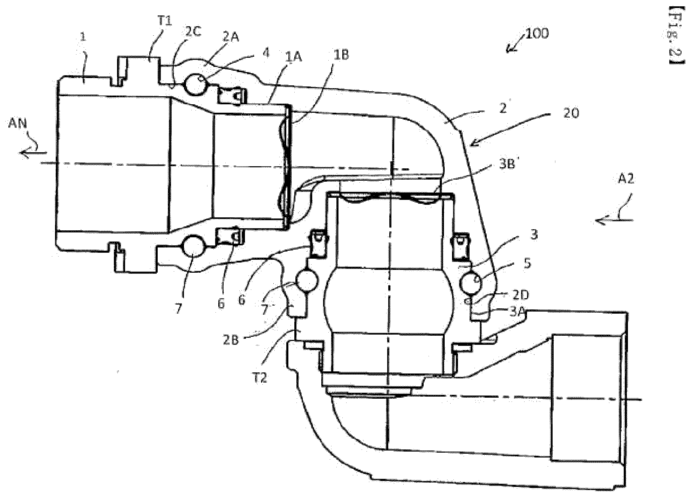

Embodiments of the present invention will be described below with reference to the accompanying drawings. First, in order to understand the embodiments of the present invention, a conventional fueling nozzle swivel joint will be explained with reference to Fig. 2.

In Fig. 2, a swivel joint 20 rotatably configured in a fueling nozzle 100 includes a fueling nozzle side bush (hereinafter referred to as " bush") 1, a main body 2, and a fueling hose side bush (hereinafter referred to as "bush") 3. The bush 1 and the main body 2 are relatively rotatable, and the bush 3 and the main body 2 are relatively rotatable, thereby improving the operability of the fueling nozzle 100.

The main body 2, the bushes 1, 3 are formed into hollow shapes. The bush 1 is fitted into an inner peripheral surface 2C of a fueling nozzle side end 2A of the main body 2, and the bush 3 is fitted into an inner peripheral surface 2D of a fueling hose side end 2B of the main body 2. The bush 1 is connected to a fueling nozzle main body not shown in Fig. 2, and the bush 3 is connected to a fueling hose not shown. In Fig. 2, an arrow AN indicates the fueling nozzle main body side.

In the fueling nozzle 100 shown in Fig. 2, there is a part (fueling nozzle side ball built-in part 4) in which balls (rotating bodies) 7 are built in on the bush 1 side, and a part (fueling nozzle side ball built-in part 5) in which the balls 7 are built in on the bush 3 side. Although not clearly shown in Fig. 2, the main body 2 is provided with grease injection nipples for injecting grease (lubricant) into the ball built-in portion 4 on the fueling nozzle side and the ball built-in portion 5 on the hose side. When assembling the swivel joint 20, the balls 7 are inserted into the ball built-in parts 4 and 5 through holes in which grease injection nipples not shown are fastened.

In Fig. 2, the bushes 1, 3 have bush protrusions T1, T2 that protrude radially outward, and contact end portions 2A, 2B of the main body 2, respectively. Further, on fitting surfaces of outer peripheral surfaces 1A, 3A of the bushes 1, 3 and the inner peripheral surfaces 2C, 2D of the main body 2 near ends 1B, 3B of the bushes 1, 3, there are fuel oil seal members (for example, U-packings) 6. The fuel oil seal members 6 are provided to prevent the fuel oil flowing inside the swivel joint 20 from leaking to the outside.

When the main body 2, the bushes 1, 3 rotate and slide relative to each other, the balls 7 in the ball built-in parts 4, 5 are worn out. Abrasion powder generated by the wear accumulates in the ball built-in portions 4, 5, further accelerating the wear of the balls 7 and reducing the slidability between the main body 2 and the bushes 1, 3. In addition, there is a possibility that the grease stored in the ball built-in parts 4, 5 leaks to the outside of the swivel joint 20 between the bush protrusions T1, T2 and the ends 2A, 2B through the fitting surfaces between the inner peripheral surfaces 2C, 2D of the main body 2 and the outer peripheral surfaces 1A, 3A of the bushes 1, 3. Further, there is a risk that rainwater, water containing salt, disinfectant, etc. may enter from outside the swivel joint 20 by following the path of grease leakage. As a result, there is a risk that the portion into which the liquid has entered may rust or the grease contained in the ball built-in portions 4, 5 may be decomposed.

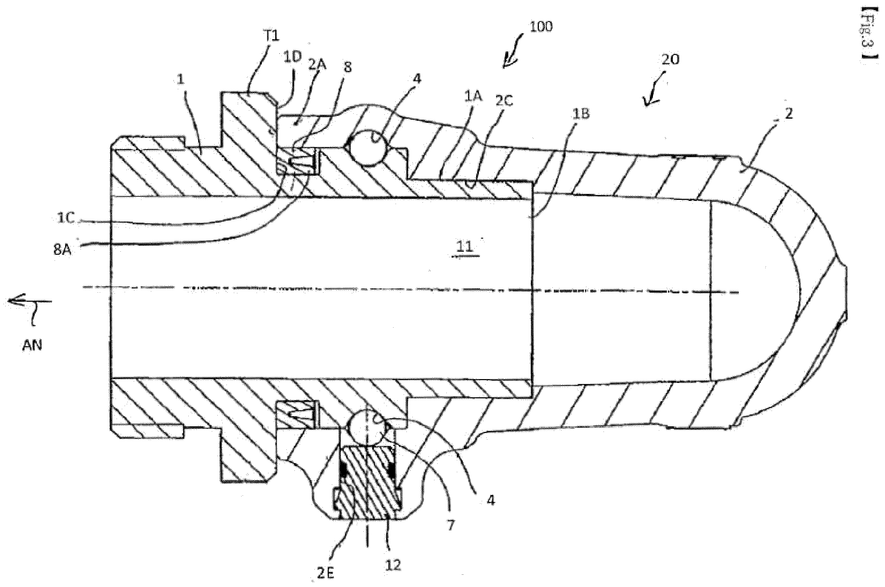

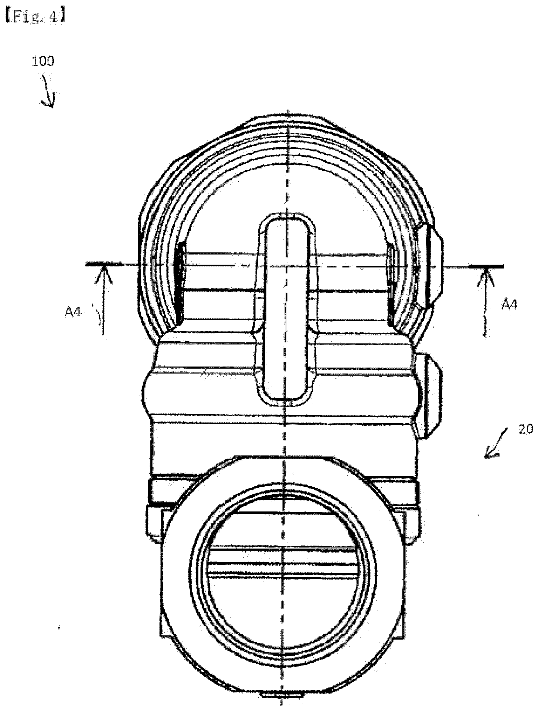

Next, an embodiment of the present invention will be described with reference to Fig 3. Here, Fig. 3 shows a cross section taken along arrows A4-A4 in Fig. 4, and Fig. 4 is a view of the swivel joint shown in Fig. 2 viewed from the direction shown by the arrow A2. In the embodiments of the present invention described from Fig. 3 onwards, members similar to those shown in Figs. 1, 2 are denoted by the same reference numerals, and redundant explanation will be omitted.

Although not shown in Fig. 3, the swivel joint 20 includes, similar to that shown in Fig. 2, the fueling hose side end 2B of the main body 2, the bush 3 and its outer peripheral surface 3A, the inner peripheral surface 2D of the main body 2 that fits into the outer peripheral surface 3A, the body side end 3B of the bush 3, the hose side ball built-in part 5, and so on.

No sealing member is provided at the fitting surfaces between the outer peripheral surfaces 1A, 3A of the bushes 1, 3 and the inner peripheral surfaces 2C, 2D of the main body 2 that are closer to the ends 1B, 3B. Therefore, fuel oil flowing through a flow path 11 in the swivel joint 20 infiltrates and reaches the ball built-in parts 4, 5. Since the balls 7 are immersed in fuel oil, they are lubricated in the same way as when lubricating oil is injected, and wear is suppressed. That is, since the fuel oil acts as a lubricating oil, there is no need to separately inject grease. Therefore, there is no need to periodically replenish lubricating oil. Furthermore, the lubricating oil whose viscosity has decreased due to deterioration will not leak out of the swivel joint 20, and there will be no possibility of misunderstanding that fuel oil has leaked. In Fig. 3, ball insertion holes 2E communicate with the ball built-in parts 4 and 5, and the balls 7 are inserted into the ball built-in parts 4 and 5 through the ball insertion holes 2E. Then, a plug 12 is attached to close the ball insertion hole 2E.

When fueling is performed with the fueling device and the pressure of the fuel oil in the flow path 11 fluctuates due to fueling and fueling stop, although the pressure fluctuation is attenuated, it propagates to the fuel oil in the ball built-in parts 4 and 5 via the fitting surfaces between the outer peripheral surfaces 1A and 3A of the bushes 1 and 3 and the inner peripheral surfaces 2C and 2D of the main body 2. This pressure fluctuation allows the fuel oil to move between the flow path 11 and the ball built-in parts 4 and 5. Due to this movement, even if the balls 7 are worn, the wear powder is flowed to the flow path 11. Therefore, the balls 7 or the ball built-in parts 4 and 5 are prevented from being worn out by wear powder. Here, since the balls 7 are lubricated with fuel oil, the amount of abrasion powder generated is extremely small, and even if the powder is flown to the flow path 11 by the fuel oil, no inconvenience will occur.

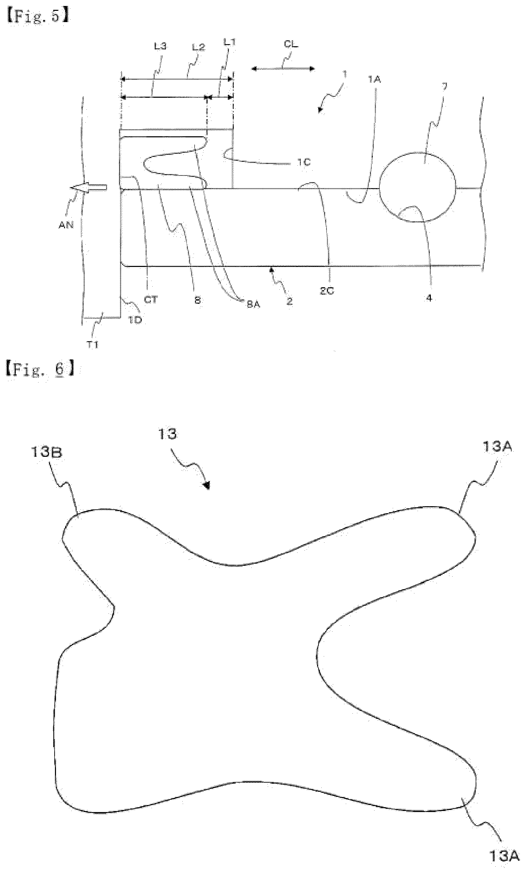

In Fig. 3, in a region of the bush 1 closer to the fueling nozzle (an arrow AN side: left side in Fig. 3) than the ball built-in portion 4, a fueling nozzle side seal member 8 (U-packing: seal member) is provided at the boundary between the outer peripheral surface 1A of the bush 1 and the inner peripheral surface 2C of the main body 2. The sealing member 8 has an annular shape as a whole and a U-shaped cross section. The packing 8 has a base whose one surface (the surface that contacts the end surface 1D) is flat over the entire circumference, and two concentrically arranged protrusions (lips 8A in Fig. 5,) that protrude from the base.

Moreover, as shown in Fig. 5, a fueling nozzle side CT of a housing groove 1C that accommodates the seal member 8 is flush with the end surface 1D of the protrusion T1 of the bush 1. As a result, a surface of the fueling nozzle side U-packing 8 is located at the end surface (the contact surface between the main body 2 and the bush 1) 1D of the protruding portion T1 of the bush 1.

This U-packing 8 reliably seals fuel oil in the boundary between the outer peripheral surface 1A of the bush 1 and the inner peripheral surface 2C of the main body 2, in a region on the fuel supply nozzle side (the arrow AN side). In addition, leakage of fuel oil to the outside of the swivel joint 20 can be prevented. In order to reliably prevent fuel oil from leaking to the outside of the swivel joint 20, the lips 8A of the U-packing 8 are arranged to face the ball built-in portion 4 side (inside the swivel joint 20).

The pressure in the flow path 11 in the swivel joint 20 propagates to the U-packing 8 via the boundary between the outer peripheral surface 1A of the bush 1 and the inner peripheral surface 2C of the main body 2. When the pressure fluctuation in the flow path due to fueling and stoppage propagates to the U-packing 8 via the fueling nozzle side ball built-in part 4, in Fig. 5, the U-packing 8 moves within the accommodation groove 1C by a range indicated by a length L1 in a swivel joint longitudinal direction CL.

Assuming that the dimension in the longitudinal direction (direction of the arrow CL) of the accommodation groove 1C is "L2", and the dimension in the longitudinal direction of the U-packing 8 is "L3", the movement range L1 of the U-packing 8 is expressed as L1=L2-L3. Moving the U-packing 8 in the longitudinal direction within the range of length L1 allows the U-packing 8 and the housing groove 1C of the U-packing 8 to act like a piston and cylinder to help fuel discharged from the U-packing 8 side or sucked into the U-packing 8 side. Thereby, the movement of the fuel oil is further promoted, and the abrasion powder of the balls 7 in the ball built-in part 4 on the fuel supply nozzle side is easily discharged from the ball built-in part 4.

Although not shown in Fig. 3, a fueling hose side U-packing 9 (sealing member) configured similarly to the U-packing 8 (fueling nozzle side sealing member) is provided, and has the same effect as the U-packing 8.

It is also conceivable to use an X-packing instead of the U-packing as the sealing members 8 and 9. However, the X-packing is larger than the U-packing, and there is a problem in that the weight of the cast body 2 increases accordingly. Furthermore, since the X-packing has twice the number of lips (four) as the U-packing, the force with which the lips abut against the main body or the bush is strong, and the rotational (sliding) resistance between the main body and the bush is strong. The X-packing is more easily deformed than the U-packing due to relative rotation between the main body and the bush. Therefore, in the illustrated embodiment, the U-packing is more suitable as the sealing member.

As the U-packing, not only the commonly used type but also the type of a U-packing 13 shown in Fig. 6 can be used. This modified U-packing 13 has not only lips 13A on the open side but also a lip 13B on the opposite side (so-called "closed side of the U"). The lip 13B is smaller than the lips 13A, and is provided on one of the closed sides of the U (upper side in Fig. 6). Furthermore, it is also possible to use an O-ring or an X-ring as the sealing members 8 and 9.

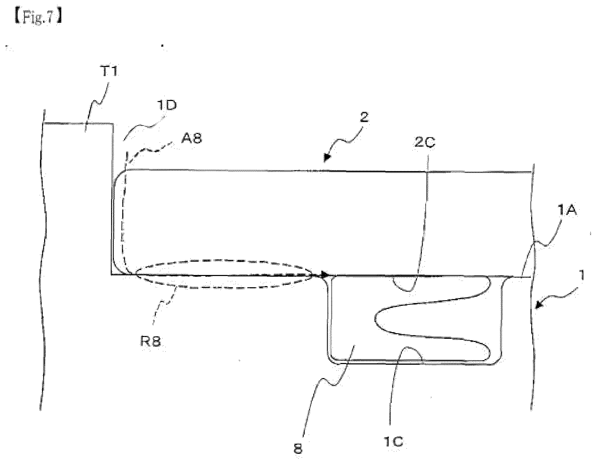

Rainwater, salt-containing water, and disinfectant liquid existing outside the swivel joint 20 may enter the swivel joint 20 from between the bush protrusions T1 and T2 and the ends 2A and 2B of the main body 2. As shown in Fig. 7, when the U-packing 8 (sealing member) is provided at a location separated from the end surface 1D of the protruding portion T1 of the bush 1, disinfectant solution, rust preventive agent, rainwater, salt-containing water, and other foreign substances enter the area on the ball built-in part 4 side (right side in Fig. 7; the ball built-in part 4 is not shown in Fig. 7). In

Fig. 7, this infiltration route is indicated by a dotted arrow A8. Then, the infiltrated area at the boundary between the main body 2 and the bush 1 (the area indicated by a reference numeral R8 in Fig. 7) will develop rust. Therefore, in the illustrated embodiment, the U-packing 8 is provided on the end surface 1D of the protruding portion T1 of the bush 1 to prevent the liquid and the like from entering the area on the ball built-in portion 4 side at the boundary between the main body 2 and the bush 1. In order to prevent the fuel oil from leaking to the outside of the swivel joint 20, the U-packings 8 and 9 are arranged to receive the pressure within the flow path, but since no pressure is applied from the outside, it is possible to prevent disinfectant, rainwater, and water containing salt from entering the swivel joint 20 from the outside. This prevents the balls 7 and the ball built-in parts 4 and 5 from rusting, and maintains the slidability of the swivel joint 20.

Regarding the arrangement position of the U-packing, the nozzle side U-packing 8 has been described above, but the same applies to the arrangement position of the fueling hose side U-packing 9 (not shown in Fig. 3). That is, the fueling hose side U-packing 9 is arranged on an end surface of the protruding portion T2 of the bush 3. The other configurations and effects of the swivel joint 20 described with reference to Figs. 3 to 7 are the same as those of the swivel joint shown in Fig. 2.

The nozzle side U-packing 8 is provided on the bush 1. Although not clearly shown in Figs. 3 to 7, the fueling hose side U-packing 9 is provided on the bush 3. The U-packings 8 and 9 can also be provided on the inner peripheral surfaces 2C and 2D of the main body 2. In that case, in the main body 2, it is preferable to provide a built-up portion in a region radially outward from the location where the U-packings 8, 9 are provided in order to ensure a sufficient thickness. Even when the U-packings 8 and 9 are provided on the inner peripheral surface 2C and 2D sides of the main body 2, the end surface CT of the housing groove 1C that accommodates the U-packings 8 and 9 is the same as the end surface of the bush protrusions T1 and T2.

It should be noted that the illustrated embodiments are merely examples, and are not intended to limit the technical scope of the present invention.

### [Explanation of symbols]

1 bush
1A outer surface of bush
1B main body side end of bush
1C groove that accommodates U-packing
1D end face of protrusion T1 of bush
2 main body
2A fueling nozzle side end of main body
2B main body fueling hose side end
2C inner peripheral surface on fueling nozzle side of main body
2D inner peripheral surface on fueling hose side of main body
3 bush
3A outer surface of bush
3B main body side end of bush
4 built-in ball part on fueling nozzle side
5 built-in ball part on fueling hose side
7 balls (rotating bodies)
8 nozzle side sealing member (nozzle side U-packing)
9 hose side sealing member (hose side U-packing)
100 fueling nozzle
T1 bush protrusion
T2 bush protrusion

## Claims

1. A fueling nozzle swivel joint comprising:
a cylindrical main body,
a hollow fueling nozzle side bush fitted into a fueling nozzle side end of the main body;
a hollow fueling hose side bush fitted into a fueling hose side end of the main body;
rotating bodies interposed between fitting surfaces of the main body and the fueling nozzle side bush to allow relative rotation of the main body and the fueling nozzle side bush; and
rotating bodies interposed between fitting surfaces of the main body and the fueling hose side bush to allow relative rotation of the main body and the fueling hose side bush,
wherein no sealing member is provided in a region of the fitting surfaces of the main body and the fueling nozzle side bush from where the rotating bodies are located toward the main body side end of the fueling nozzle side bush and in a region of the fitting surfaces of the main body and the fueling hose side bush from where the rotating bodies are located toward the main body side end of the fueling hose side bush,
and a sealing member is provided in a region of the fitting surfaces of the main body and the fueling nozzle side bush from where the rotating bodies are located toward a fueling nozzle side end of the main body and in a region of the fitting surfaces of the main body and the fueling hose side bush from where the rotating bodies are located toward a fueling hose side end of the main body.

2. The fueling nozzle swivel joint as claimed in claim 1, wherein said sealing member disposed between the fitting surfaces of the main body and the fueling nozzle side bush and between the fitting surfaces of the main body and the fueling hose side bush is a packing having an annular shape as a whole and a U-shaped cross section.

3. The fueling nozzle swivel joint as claimed in claim 2, wherein said packing has a base whose one surface is flat over an entire circumference, and two protrusions protruding from the base and arranged concentrically, and said one surface of the packing is flush with the fitting surfaces of the main body and the fueling nozzle side bush or the fitting surfaces of the main body and the fueling hose side bush.
